**Europäisches Patentamt**

**European Patent Office**

**Office européen des brevets**

(19)

(11) Veröffentlichungsnummer: **0 013 694**
**B1**

(12)

# EUROPÄISCHE PATENTSCHRIFT

(45) Veröffentlichungstag der Patentschrift:
25.11.81

(51) Int. Cl.³: **C 09 K 3/10**, F 16 J 15/10,
C 04 B 35/54

(21) Anmeldenummer: **79104097.5**

(22) Anmeldetag: **23.10.79**

(54) **Flexibler Graphitschichtstoff und Verfahren zu dessen Herstellung.**

(30) Priorität: **20.01.79 DE 2902252**

(43) Veröffentlichungstag der Anmeldung:
**06.08.80 Patentblatt 80/16**

(45) Bekanntmachung des Hinweises auf die Patenterteilung:
**25.11.81 Patentblatt 81/47**

(84) Benannte Vertragsstaaten:
**FR GB IT SE**

(56) Entgegenhaltungen:
**DE-A-1 771 821**
**FR-A-2 407 186**
**GB-A-1 194 766**

(73) Patentinhaber: **SIGRI ELEKTROGRAPHIT GMBH, Werner von Siemens-Strasse 18, D-8901 Meitingen (DE)**

(72) Erfinder: **Freundlinger, Ernst, Dipl.-Ing. Dr., Wertinger Strasse 17, D-8901 Meitingen-Langenreichen (DE)**
Erfinder: **Hirschvogel, Alfred, Falkenstrasse 16, D-8901 Langweld (DE)**

Flexibler Graphitschichtstoff und Verfahren zu dessen Herstellung

Die Erfindung betrifft einen flexiblen Graphitschichtstoff, der nichtgraphitische Korrosionsinhibitoren enthält.

Zum Herstellen von flexiblem Graphitschichtstoff ist es nach der deutschen Patentschrift 66 804 bekannt, flockenförmige Naturgraphitpartikel in ein flüssiges Oxidationsmittel einzutauchen und anschließend innerhalb einiger Sekunden auf etwa 1000°C zu erhitzen. Die einzelnen Graphitpartikel dehnen sich bei dieser Behandlung um einen beträchtlichen Betrag und können ohne Zusatz eines besonderen Bindemittels etwa durch Walzen, Stampfen oder Hämmern zu flexiblen Flächengebilden, wie z. B. dünnen Folien oder dickeren laminatartigen Formen verdichtet werden. Der für Flüssigkeiten und Gase undurchlässige, temperaturbeständige und selbstschmierende Schichtstoff wird unter anderem als Dichtung und Packung verwendet, bei denen der Schichtstoff an anderen Werkstoffen, wie z. B. Metallen, anliegt.

Es wurde gefunden, daß einige Stahlsorten im Kontakt mit Graphitschichtstoff korrodieren, wobei die Stärke des Korrosionsangriffs durch die Art des umgebenden Mediums und Art und Menge der in dem Schichtstoff enthaltenen Verunreinigungen bestimmt wird. Beispielsweise korrodieren Chrom-Nickel-Stähle im Kontakt mit Graphitschichtstoff in vollentsalztem Wasser, nicht jedoch in normalem Leitungswasser. Es ist bekannt (FR-A-2 407 186), die schädliche Korrosion bestimmter Stahlsorten in Kontakt mit Graphitschichtstoff zu verhüten oder wesentlich zu vermindern, in dem man in den Schichtstoff Alkalisalze eines oder mehrerer Elemente der Gruppe VI A des Periodensystems, besonders Natriummolybdat, einarbeitet. Die Wirksamkeit dieser Inhibitorzusätze ist jedoch zeitlich begrenzt, da die Salze besonders bei Verwendung der Graphitschichtstoffe in hochgespanntem Dampf allmählich in Lösung gehen oder ausgewaschen werden. Zum Beispiel wurden an einer Packung, deren Gehalt an Korrosionsinhibitoren ursprünglich etwa 0,8 Gew.-% betrug, nach längerer Beaufschlagung mit Wasserdampf von 50 bar, 300 K ein Transport des Inhibitors gemäß folgender Tabelle gemessen:

Inhibitorgehalt

| | |
|---|---|
| innen | 0,09 Gew.-% |
| | 0,07 Gew.-% |
| | 0,09 Gew.-% |
| | 0,22 Gew.-% |
| | 0,50 Gew.-% |
| | 1,00 Gew.-% |
| außen | 2,70 Gew.-% |

Der der Innenseite der Packung anliegende Stahl wies nach Abbruch des Versuches lochfraßähnliche Korrosionsschäden auf.

Der Erfindung liegt daher die Aufgabe zugrunde, einen Graphitschichtstoff zu schaffen, der auch bei längerer Belastung mit hochgespanntem Dampf im Kontakt mit einem metallischen Werkstoff keine Korrosion an diesen Werkstoffen hervorruft.

Die Aufgabe wird nach der Erfindung gelöst mit einem flexiblen Graphitschichtstoff, der ein oder mehrere Molybdate aus der Gruppe Silber-, Calcium-, Bariummolybdat enthält, deren Löslichkeit in Wasser $10^{-2} - 10^{-4}$ g/100 ml beträgt. Eine besonders günstige Wirkung wird mit einem Graphitschichtstoff erzielt, dessen Molybdatgehalt 0,5 − 1,0 Gew.-% beträgt.

Der Erfindung liegt die Erkenntnis zugrunde, daß die Löslichkeit der bisher als Korrosionsinhibitoren in Graphitschichtstoffen verwendeten Alkalisalzen der VI A Gruppe des Periodensystems unter bestimmten Bedingungen zu groß ist. Andere Salze, wie z. B. Strontium-, Zink-, Cadmium- oder Zinnmolybdat, weisen eine zu geringe Löslichkeit auf als daß noch eine inhibierende Wirkung erzielt werden könnte. Es wurde nun gefunden, daß diese Nachteile mit Molybdatsalzen zu vermeiden sind, deren Löslichkeit in Wasser zwischen $10^{-2} - 10^{-4}$ g/100 ml beträgt. Diese Salze weisen eine zur Unterdrükkung der Korrosion hinreichende Löslichkeit auf, die aber nicht so groß ist, daß sie in der normalen Betriebszeit etwa einer Packung vollständig aus dem Graphitschichtstoff herausgelöst werden.

Zur Herstellung des erfindungsgemäßen Graphitschichtstoffs werden die pulverförmigen Molybdate mit expandierten Graphitteilchen gemischt und das Gemisch wird zu Folien oder ähnlichen flexiblen Formen verpreßt. Nach einem anderen Verfahren werden die Molybdate mit einer Graphitverbindung, wie z. B. Graphithydrogensulfat, gemischt, das Gemisch zur Bildung von expandierten Graphitteilchen erhitzt und anschließend zu flexiblen Flächengebilden geformt. Bevorzugt wird ein Verfahren, bei welchem flexibler Graphitschichtstoff in eine wässerige Lösung eines Alkalimolybdats, z. B. Natriummolybdat, getaucht und nach einer Zwischentrocknung in eine zweite Lösung gebracht wird, die ein oder mehrere leichtlösliche Salze aus der Gruppe Silber-, Calcium- und Bariumsalze enthält. Geeignete Salze für die zweite Imprägnierlösung sind z. B. Silbernitrat, Calciumhydroxyd oder Bariumhydroxyd. Die Lösungen sollen etwa 1% Salze enthalten und die Tauchzeit für jede Imprägnierlösung beträgt für Folienbänder mit einer Dicke von 0,5 mm und einer Rohdichte von etwa 0,7 g/cm³ etwa 30 min. Die Verteilung des Imprägniermittels und die Imprägnierzeit kann in bekannter Weise dadurch verbessert bzw. vermindert werden, daß man die Imprägnierung bei einem möglichst kleinen Druck durchführt und anschließend den Druck in dem Imprägnierkessel erhöht.

Die Erfindung wird im folgenden durch ein Beispiel erläutert:

Graphitfolie mit einer Rohdichte von 0,7 g/cm³ und einer Foliendicke von 0,5 mm wurde in Rollenform in einen Imprägnierkessel eingesetzt und der Kessel auf einen Druck von etwa $10^{-3}$ bar evakuiert. Nach einer Entgasungszeit von 15 min wurde das Ventil zur Vakuumpumpe geschlossen, eine 0,8% Natriummolybdat enthaltende wässerige Lösung in den Kessel gesaugt und der Druck dann auf etwa 10 bar erhöht. Nach einer Verweilzeit von etwa 15 min wurde die Folie in einem Vakuumtrockner bei einer Temperatur von 110° C und einem Druck von etwa $10^{-2}$ bar 2 h getrocknet und anschließend wieder in den Imprägnierkessel eingesetzt. Der Zyklus begann von neuem, wobei als zweites Imprägniermittel eine wässerige Bariumnitratlösung mit etwa 1% Salz verwendet wurde. Die getrocknete Folie enthielt am Ende des Zyklus ca. 1% Bariummolybdat.

Zur Prüfung des Inhibierungseffekts wurden Scheiben aus der Graphitfolie gestanzt und zwischen je zwei Chromnickel-Stahlscheiben gespannt, deren möglicherweise passivierende Oberflächenschichten zuvor durch Schleifen entfernt worden waren. Diese Anordnung wurde in eine mit vollentsalztem Wasser (Leitfähigkeit $<1\,\mu s/cm$) gefüllten Behälter gehängt. Die Wassertemperatur war 100° C und die Verdampfungsverluste wurden ständig durch Frischwasser ersetzt. Nach einer Versuchszeit von 60 Tagen wiesen die Stahlplatten in Kontakt mit erfindungsgemäßem Graphitschichtstoff keine Korrosion auf, Platten im Kontakt mit Natriummolybdat als Inhibierungsmittel enthaltendem Graphitschichtstoff wiesen einige lochfraßähnliche Korrosionsstellen auf.

## Patentansprüche

1. Flexibler Graphitschichtstoff, gekennzeichnet durch seinen Gehalt an einem oder mehreren, eine Löslichkeit in Wasser von $10^{-2}$ bis $10^{-4}$ g/100 ml aufweisenden Molybdaten aus der Gruppe Silber-, Calcium-, Bariummolybdat.

2. Flexibler Graphitschichtstoff nach Patentanspruch 1, dadurch gekennzeichnet, daß der Molybdatgehalt 0,5 – 1,0 Gew.-% beträgt.

3. Verfahren zum Herstellen eines Graphitschichtstoffs nach den Patentansprüchen 1 bis 2, dadurch gekennzeichnet, daß der Graphitschichtstoff in eine erste, ein Alkalimolybdat enthaltende Lösung getaucht, anschließend getrocknet und dann in eine zweite eine oder mehrere leichtlösliche Salze aus der Gruppe Silber-, Calcium- und Bariumsalze enthaltende Lösung getaucht und anschließend zum Entfernen des Lösungsmittels bei einer erhöhten Temperatur getrocknet wird.

## Claims

1. A flexible graphite laminate comprising one or more molybdates of the group containing silver, calcium and barium molybdate, the solubility in water of which is from $10^{-2}$ to $10^{-4}$ g/100 ml.

2. A flexible graphite laminate as claimed in claim 1, comprising a molybdate content from 0.5 to 1.0 weight-%.

3. A method for producing a graphite laminate as claimed in claims 1 and 2, characterised by dipping a graphite laminate into a first solution containing an alkalimolybdate, removing the laminate from the solution, drying the laminate and dipping it into a second solution, containing one or more soluble salts of the group silver, calcium and barium salts and removing the laminate from the second solution and heating it at an increased temperature.

## Revendications

1. Stratifié souple en graphite, caractérisé en ce qu'il contient un on plusieurs molybdates choisis parmi les molybdates d'argent, de calcium et de barium, lequel molybdate présente une solubilité dans l'eau de $10^{-2}$ à $10^{-4}$ g/100 ml.

2. Stratifié souple en graphite selon la revendication 1, caractérisé en ce que sa teneur en molybdate est de 0,5 – 1,0% en poids.

3. Procédé pour la fabrication d'un stratifié en graphite selon les revendications 1 à 2, caractérisé en ce que le stratifié en graphite est plongé dans une première solution contenant un alcali-molybdate, qu'il est en suite sèché, puis plongé dans une deuxième solution contenant un on plusieurs sels solubles choisis parmi les sels d'argent, de calcium et de barium et enfin qu'il est sèché à haute température jusqu' à évaporation totale de la solution.